# EUROPÄISCHE PATENTSCHRIFT

(11) **EP 3 213 336 B1**
(45) Veröffentlichungstag und Bekanntmachung des Hinweises auf die Patenterteilung: **02.03.2022**
(21) Anmeldenummer: 15800726.0
(22) Anmeldetag: 28.10.2015
(51) Int. Cl.: H01H 39/00, H01H 1/58, H01R 13/71, H01R 13/713, H01R 24/68, B60R 16/03

(54) **PYROTECHNISCHER SCHUTZSCHALTER**
PYROTECHNICAL CIRCUIT BREAKER
DISJONCTEUR DE PROTECTION PYROTECHNIQUE

(30) Priorität: 30.10.2014 DE 102014222230
(43) Veröffentlichungstag der Anmeldung: 06.09.2017
(73) Patentinhaber: LEONI Bordnetz-Systeme GmbH, 97318 Kitzingen (DE)
(72) Erfinder: HOPF, Martin, 96129 Strullendorf (DE); STEINER, Peter, 96152 Burghaslach (DE); WAGNER, Gunnar, 97084 Würzburg (DE); WOLF, Sascha, 96050 Bamberg (DE)
(74) Vertreter: FDST Patentanwälte
(86) Internationale Anmeldenummer: PCT/EP2015/075025
(87) Internationale Veröffentlichungsnummer: WO 2016/066707

(56) Entgegenhaltungen:
- DE-A1- 19 616 994
- DE-A1- 19 749 896
- DE-A1-102004 008 120
- DE-A1-102004 010 071
- JP-A- 2014 049 272
- US-A- 3 909 767

## Beschreibung

Die Erfindung betrifft einen pyrotechnischen Schutzschalter, insbesondere für ein Kraftfahrzeug.

Bei einem pyrotechnischen Schutzschalter, auch pyrotechnisches Sicherungselement genannt, handelt es sich nicht um eine Schutzvorrichtung zur Absicherung eines Strompfades gegen Überströme, wie dies beispielsweise bei Schmelzsicherungen der Fall ist. Stattdessen handelt es sich bei dem pyrotechnischen Schutzschalter, auch pyrotechnischer Sicherheitsschalter, pyrotechnisches Trennelement oder kurz pyrotechnischer Schalter genannt, um eine Art Notausschalter der Stopp-Kategorie 0 (EN ISO 13850:2008 Pkt. 4.1.4 und EN 60204-1:2006 Pkt. 9.2.2), welcher sich manuell auslösen lässt und/oder unter vorgegebenen Bedingungen automatisch angesteuert und ausgelöst wird.

Hierbei ist der pyrotechnische Schutzschalter nach einem an sich bekannten Prinzip aufgebaut. Er umfasst einen pyrotechnischen Treibsatz, der typischerweise durch ein elektrisches Zündsignal, insbesondere ein Sensorsignal eines angeschlossenen Sensors, gezündet wird und infolgedessen einen Trennkörper, meist ein Keil oder ein Bolzen, beschleunigt, so dass dieser einen elektrischen Leiter, meist einen Leiterstreifen, mechanisch durchtrennt. Hierdurch wird die durch den elektrischen Leiter gegebene elektrische Verbindung, beispielsweise zwischen einer elektrischen Energiequelle, zum Beispiel einer Batterie in einem Kraftfahrzeug, und einem angeschlossenen Strompfad mit diversen Verbrauchern unterbrochen. Aufgrund dieses Funktionsprinzips wird ein solcher pyrotechnischer Schutzschalter mitunter auch als Batterietrennschalter bezeichnet.

Verschiedene Ausführungen eines entsprechenden pyrotechnischen Schutzschalters sind beispielsweise in den Druckschriften DE 197 49 896 A1, JP 2014 049 272 A, DE 10 2004 008 120 A1, DE 10 2004 010 071 A1 und DE 196 16 994 A1 beschrieben.

Ausgehend hiervon liegt der Erfindung die Aufgabe zugrunde, eine vorteilhafte Ausgestaltung für einen pyrotechnischen Schutzschalter anzugeben.

Diese Aufgabe wird erfindungsgemäß gelöst durch einen pyrotechnischen Schutzschalter mit den Merkmalen des Anspruchs 1. Bevorzugte Weiterbildungen sind in den rückbezogenen Ansprüchen enthalten.

Ein entsprechender pyrotechnischer Schutzschalter ist dabei bevorzugt für ein Bordnetz eines Kraftfahrzeuges ausgelegt und umfasst ein Gehäuse, eine pyrotechnische Einheit sowie ein Stromführungsblech, auch Stromschiene genannt. Hierbei weist das Stromführungsblech zumindest zwei Anschlusselemente auf, von denen eines als Eingangsanschluss für eine Stromzuflussleitung und das andere als Ausgangsanschluss für eine Stromabführleitung ausgebildet ist, wobei zumindest eines dieser beiden Anschlusselemente als Steckkontakt einer Steckverbindung ausgestaltet ist.

Während also pyrotechnische Schutzschalter nach dem Stand der Technik entweder nach Art einer Schelle an einem gegebenem Leiter befestigt oder nach Art einer Hülse über einen gegebenen Leiter gestülpt werden oder aber Anschlusselemente aufweisen, an welche elektrische Leiter durch Anlöten oder mit Hilfe einer Schraubverbindung elektrisch angebunden werden, weist der hier vorgestellte pyrotechnische

Schutzschalter Anschlusselemente auf, die als Steckkontakte der Stromschiene ausgebildet sind, sodass sich elektrische Leiter einfach und schnell mittels einer Steckverbindung elektrisch leitend an den pyrotechnischen Schutzschalter anbinden lassen.

Hierdurch lässt sich ein entsprechender pyrotechnischer Schutzschalter nicht nur einfach und schnell in einen Stromkreis und insbesondere in ein Bordnetz eines Kraftfahrzeugs einbinden, sondern ebenso schnell und einfach wieder entfernen, also im Bedarfsfall zum Beispiel austauschen. Der pyrotechnische Schutzschalter eignet sich damit insbesondere auch für den Einsatz in der Fließband- oder Massenproduktion von Produkten, auch Kraftfahrzeugen, für die die Verwendung pyrotechnischer Schutzschalter vorgesehen ist, da der einfache und schnelle Einbau des pyrotechnischen Schutzschalters den Produktionsprozess vereinfacht und beschleunigt.

Weiterhin sind alle Anschlusselemente des Stromführungsbleches und bevorzugt alle Anschlusselemente des pyrotechnischen Schutzschalters als Steckkontakte ausgebildet, sodass der Einbau eines entsprechenden pyrotechnischen Schutzschalters ausschließlich über Steckverbindungen erfolgt.

Weiter ist die pyrotechnische Einheit des pyrotechnischen Schutzschalters bevorzugt einfach gehalten und nach an sich bekanntem Grundprinzip aufgebaut. Dabei umfasst die pyrotechnische Einheit zweckdienlicher Weise einen pyrotechnischen Treibsatz sowie einen elektrischen Zünder mit einem Signaleingang, so dass über den Signaleingang ein Auslösesignal oder Zündsignal in den Zünder eingespeist werden kann, welches den Zünder aktiviert und damit die Zündung des pyrotechnischen Treibsatzes auslöst. Der gezündete pyrotechnische Treibsatz wiederum beschleunigt ein nachfolgend als Hammerelement oder kurz Hammer bezeichnetes Bauteil, den sogenannten Trennkörper, der pyrotechnischen Einheit, welches hierdurch mit einer keilartig oder dornartig ausgestalteten Front voraus auf ein nachfolgend als Ambosselement oder kurz Amboss bezeichnetes Bauteil der pyrotechnischen Einheit zugetrieben wird. In der Folge wird dann zumindest ein Teil des Stromführungsbleches, welches zwischen Hammer und Amboss positioniert ist, durchtrennt oder aber das gesamte Stromführungsblech wird in einem Bereich, insbesondere einem Mittenbereich, als Ganzes durchtrennt. In jedem Fall aber bewirkt die Einspeisung eines Auslösesignals letzten Endes eine galvanische Trennung von Eingangsanschluss und Ausgangsanschluss, also die Unterbrechung der elektrischen Verbindung zwischen dem Eingangsanschluss und dem Ausgangsanschluss.

Im Rahmen des Einbaus des pyrotechnischen Schutzschalters, also im Rahmen der Einbindung in einen Stromkreis, wird der Signaleingang des Zünders signaltechnisch mit einem Signalgeber verbunden, durch welchen die Auslösebedingung für den pyrotechnischen Schutzschalter vorgegeben wird, der also beim Eintreten einer vorgegebenen Bedingung, dem Auslösefall, ein Auslösesignal generiert und an den pyrotechnischen Schalter übermittelt. Ist nun ein entsprechender pyrotechnischer Schutzschalter beispielsweise in einem Kraftfahrzeug verbaut, so dient zum Beispiel ein Airbag-Steuergerät im Kraftfahrzeug als Signalgeber, sodass im Falle eines Auslösens eines Airbags im Kraftfahrzeug auch der pyrotechnische Schutzschalter ausgelöst wird, also der pyrotechnische Treibsatz gezündet wird. Die Auslösung des pyrotechnischen Schutzschalters erfolgt dann, im Falle eines Verkehrsunfalls, wobei der pyrotechnische Schutzschalter hierbei typischer Weise derart in das Bordnetz des Kraftfahrzeuges eingebunden ist, dass durch die Auslösung elektrische Energiequellen des Kraftfahrzeuges nach einem Verkehrsunfall quasi isoliert und vom übrigen Kraftfahrzeug-Bordnetz getrennt werden. Dadurch wird verhindert, dass unfallbedingt freiliegende und/oder beschädigte elektrische Kabelverbindungen oder aber freiliegende und/oder beschädigte Elektronikkomponenten ein Risiko, insbesondere für Rettungskräfte, darstellen, also zum Beispiel auslaufendes Öl oder Benzin entzünden.

Auch das Stromführungsblech des pyrotechnischen Schutzschalters, welches beispielsweise aus Kupfer oder einer Kupferlegierung besteht, ist bevorzugt einfach gehalten, so dass das Stromführungsblech mit Hilfe weniger Arbeitsschritte gefertigt werden kann. Dabei ist das Stromführungsblech bevorzugt einstückig und einteilig ausgestaltet und bildet die Anschlusselemente durch konstruktive Gestaltungselemente, also zum Beispiel Vertiefungen oder Materialaussparungen, aus. Die Anschlusselemente sind somit Teil des einstückigen und einteiligen Stromverteilungsbleches und werden dementsprechend nicht mittels eines Fügeprozesses nachträglich angefügt. Günstig ist dabei zum Beispiel die Fertigung des Stromführungsbleches in einem Stanz- oder Stanzbiegeprozess, also die Ausgestaltung des Stromführungsbleches als Stanz- oder Stanzbiegeblech.

Weiterhin ist vorgesehen, dass alle Steckkontakte des Stromführungsbleches in einem Randbereich des Stromführungsbleches, insbesondere regelmäßig oder matrixartig, angeordnet sind, also relativ dicht beieinander positioniert sind. Alle Steckkontakte sind daher von einer Seite aus erreichbar. Zudem bietet diese kompakte Anordnung der Steckkontakte die Möglichkeit, am pyrotechnischen Schutzschalter eine (einzige) Stecker-Einheit auszubilden, sodass sich alle Stecckontakte des Stromführungsbleches nach dem Stecker-Buchse-Prinzip mit nur einem Handgriff elektrisch an einen Stromkreis anbinden lassen.

Dabei ist es weiter vorteilhaft, alle Steckkontakte gleichartig und zum Beispiel stiftartig, also zylindrisch, oder als flache Zungen auszubilden. Günstig ist hierbei insbesondere eine zungenartige Ausgestaltung, zumindest, wenn das Stromführungsblech wie zuvor beschrieben als Stanzbiegeblech ausgestaltet ist. In diesem Fall ist dann bevorzugt für das Stanzbiegeblech eine einheitliche Stärke oder Dicke vorgesehen. Bevorzugt werden die im Rahmen des Stanzprozesses ausgebildeten Zungen im Rahmen einer Nachbearbeitung umgebogen, also aus der Ebene des Stromführungsbleches heraus gebogen. Die typischer Weise langgestreckten Zungen stehen nach dem Biegeprozess und somit nach Fertigstellung des Stromführungsbleches aus der Ebene des Stromführungsbleches heraus und bevorzugt etwa senkrecht vom übrigen Stromführungsblech ab.

Eine vergleichbare abgewinkelte Anordnung der Steckkontakte wird auch bei nicht- zungenartigen Steckkontakten bevorzugt, wobei die in der Regel länglichen Steckkontakte vorteilhafter Weise unabhängig davon hinsichtlich ihrer Längsausrichtung bevorzugt parallel zur Längsausrichtung der pyrotechnischen Einheit des pyrotechnischen Schutzschalters ausgerichtet sind, also typischer Weise parallel zur Wirkrichtung oder Bewegungsrichtung des Hammers der pyrotechnischen Einheit im Auslösefall, da hierdurch der pyrotechnische Schutzschalter besonders kompakt ausgeführt werden kann und dementsprechend dann auch ausgeführt wird.

Gemäß einer weiteren vorteilhaften Ausgestaltung des pyrotechnischen Schutzschalters sind die Steckkontakte des Stromführungsbleches von zumindest einer Gehäusewandung des Gehäuses umgeben, sodass diese quasi versenkt angeordnet sind. Die entsprechende Gehäusewandung dient dann unter anderem zum Schutz der Steckkontakte, sodass diese zum Beispiel nicht versehentlich abgebrochen werden, noch bevor der pyrotechnische Schutzschalter zum Einsatz kommt.

In vorteilhafter Weiterbildung bildet die Gehäusewandung eine Gehäusebuchse aus, in welcher alle Steckkontakte des Stromführungsbleches angeordnet und somit quasi versenkt sind. Die Gehäusewandung ist dabei typischer Weise durch eine rahmenartige Anformung am Gehäuse gegeben. Ist dann, wie zuvor beschrieben, am pyrotechnischen Schutzschalter eine Stecker-Einheit ausgebildet, welche beim Einbau des pyrotechnischen Schutzschalters mit eine komplementären Buchsen-Einheit verbunden wird, so dient die die Gehäusebuchse ausbildende Gehäusewandung nicht nur zum Schutz der Steckkontakte vor mechanischer Belastung vor einem Einsatz des pyrotechnischen Schutzschalters, sondern darüber hinaus auch zur Ausbildung einer zusätzlichen mechanischen Steckverbindung zwischen der Gehäusewandung und einem entsprechenden Gegenstück an der Buchsen-Einheit, sodass die mechanische Belastung der Steckverbindung vorwiegend von Gehäusewandungen getragen wird und nicht den Steckkontakten zusetzt. Besonders hoch ist die mechanische Belastung dabei typischer Weise beim Ausbilden der Steckverbindung oder beim Lösen der Steckverbindung, wobei die Gehäusewandung hierbei als Führung dient, was die mechanische Belastung für die Steckkontakte limitiert.

Weiter ist das Stromführungsblech derart ausgestaltet, dass dieses zumindest zwei Blechstreifen oder Leiterstreifen aufweist, die im Wirkbereich der pyrotechnischen Einheit, also im Bereich zwischen Hammer und Amboss, im Wesentlichen parallel zueinander ausgerichtet sind. Dabei ist einer der beiden Blechstreifen als Teil eines Eingangsstrompfads elektrisch leitend an zumindest einen Eingangsanschluss angebunden, wohingegen der andere der zumindest zwei Blechstreifen als Teil eines Ausgangsstrompfades elektrisch leitend an zumindest einen Ausgangsanschluss angebunden ist. Hierdurch ergeben sich zusätzliche Freiheiten bei der Ausgestaltung des Stromführungsbleches und somit des pyrotechnischen Schutzschalters.

Je nach Ausgestaltungsvariante und Anwendungszweck weist das Stromführungsblech darüber hinaus weitere Blechstreifen im Wirkbereich der pyrotechnischen Einheit auf, wobei jeder Blechstreifen entweder Teil eines Eingangsstrompfades oder Ausgangsstrompfades ist und dementsprechend an einen Eingangsanschluss bzw. an einen Ausgangsanschluss angebunden ist.

Im Auslösefall werden dann die Leiterstreifen durchtrennt, die an einen Eingangsanschluss angebunden und somit Teil eines Eingangsstrompfades sind. Alternativ werden alle Blechstreifen durchtrennt, die Teil eines Ausgangsstrompfades und somit an einen Ausgangsanschluss angebunden sind oder aber es werden alle diese Leiterstreifen durchtrennt, unabhängig davon, ob diese Teil eines Eingangsstrompfades oder eines Ausgangsstrompfades sind. An dieser Stelle sei darauf hingewiesen, dass sämtliche Leiterstreifen Teil des einstückigen Stromführungsbleches sind und somit durch Teile oder Abschnitte des Stromführungsbleches ausgebildet werden. Dementsprechend sind die Leiterstreifen oder Blechstreifen zumindest außerhalb des Wirkungsbereichs der pyrotechnischen Einheit miteinander verbunden, wobei die entsprechenden Übergangsbereiche oder Verbindungsbereiche ebenfalls eine streifenartige Form aufweisen können und in einigen Fällen aufweisen. Diese Übergangsbereiche werden jedoch im Auslösefall nicht zusätzlich durchtrennt.

Um eine Durchtrennung auch mit einem relativ kleinen oder schwachen pyrotechnischen Treibsatz bewerkstelligen zu können, was in der Regel gewünscht ist, weist das Stromführungsblech vorteilhafter Weise eine Solbruchstelle auf, die typischer Weise durch Materialaussparungen oder Durchbrüche ausgebildet wird. Für einige Anwendungszwecke ist die Solbruchstelle dabei derart gestaltet, dass diese durch zwei an gegenüberliegenden Seiten, nämlich der Oberseite und der Unterseite, des Stromführungsbleches positionierte Nuten ausgebildet wird. Da, wie zuvor beschrieben, im Wirkbereich der pyrotechnischen Einheit mehrere parallel zueinander ausgerichtete Blechstreifen oder Leiterstreifen positioniert sind, weisen alle Blechstreifen oder Leiterstreifen, die im Auslösefall durchtrennt werden sollen, entsprechende Nuten auf. Alternativ bildet eine Nut auf einer Seite, also zum Beispiel auf der Unterseite, des Stromführungsbleches die Solbruchstelle aus.

Um eine entsprechende Durchtrennung zu erleichtern, ist es weiter vorgesehen, das Hammerelement der pyrotechnischen Einheit derart auszugestalten, dass dieses im Bereich der dem Ambosselement zugewandten Front einen abstehenden Dorn aufweist, und zudem das Ambosselement mit einer an den Dorn angepassten Vertiefung oder Materialaussparung zu versehen.

Das Hammerelement, oder vielmehr der abstehende Dorn, ist derart gestaltet, dass zumindest zwei parallele Leiterstreifen im Wirkbereich der pyrotechnischen Einheit im Auslösefall zeitversetzt vom Hammerelement getroffen und in Folge dessen auch zeitversetzt durchtrennt werden.

Der pyrotechnische Schutzschalter ist bevorzugt als vorgefertigte Montagebaueinheit mit integriertem Stromführungsblech und integrierter pyrotechnischer Einheit ausgebildet und insbesondere derart gestaltet, dass die Montagebaueinheit ausschließlich mit Hilfe von Steckkontakten in einen Stromkreis und insbesondere in ein Bordnetz eines Kraftfahrzeuges elektrisch eingebunden wird. Vorzugsweise sind nicht nur die Anschlusselemente des Stromführungsbleches als Steckkontakte ausgeführt, sondern auch der Signaleingang an der pyrotechnischen Einheit, über welchen ein Auslösesignal zur Auslösung der pyrotechnischen Einheit und somit zur Zündung des pyrotechnischen Treibsatzes eingespeist werden kann.

Ausführungsbeispiele der Erfindung werden nachfolgend anhand einer schematischen Zeichnung näher erläutert. Darin zeigen:
- FIG 1: in einer Ansicht einen pyrotechnischen Schutzschalter mit einem Gehäuse,
- FIG 2: in einer perspektivischen Seitenansicht den pyrotechnischen Schutzschalter,
- FIG 3: in einer perspektivischen Seitenansicht eine in dem Gehäuse angeordnete pyrotechnische Einheit zusammen mit einem Stromführungsblech,
- FIG 4: in einer perspektivischen Seitenansicht das Stromführungsblech,
- FIG 5: in einer perspektivischen Seitenansicht ein Hammerelement und ein Ambosselement der pyrotechnischen Einheit,

Einander entsprechende Teile sind in allen Figuren jeweils mit den gleichen Bezugszeichen versehen.

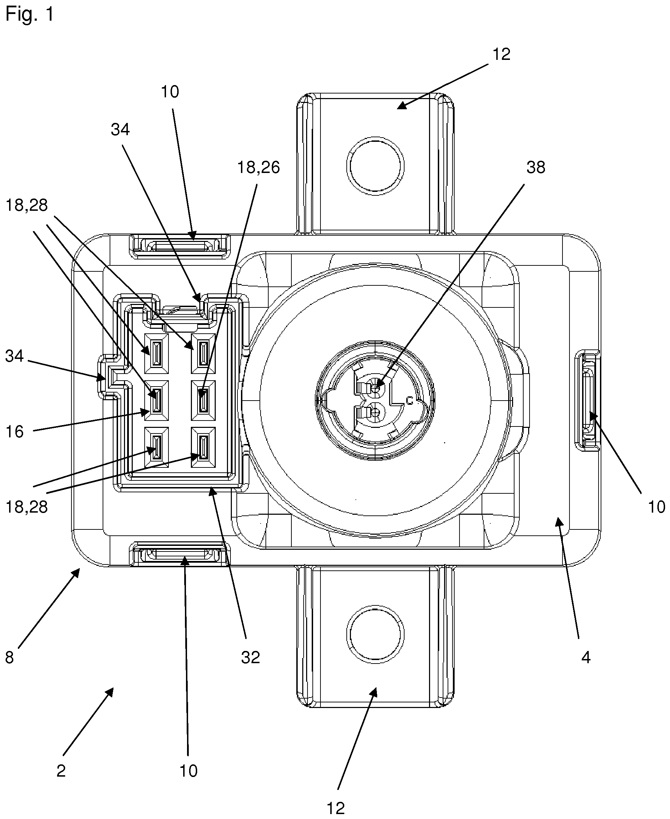

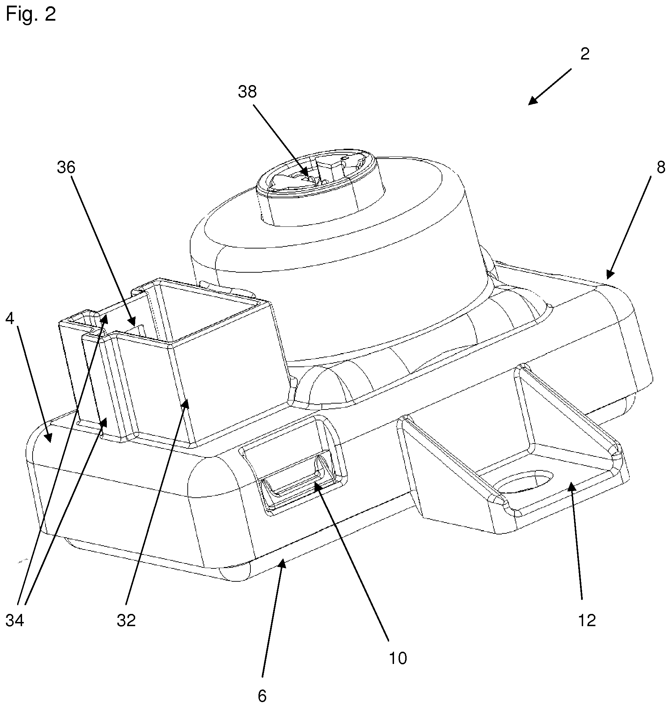

Ein nachfolgend exemplarisch beschriebener und in Fig. 1 sowie Fig. 2 dargestellter pyrotechnischer Schutzschalter 2 ist für ein Bordnetz eines Kraftfahrzeuges ausgelegt und kommt dementsprechend in einem Kraftfahrzeug zum Einsatz. Der pyrotechnische Schutzschalter 2 umfasst dabei ein aus einer Oberschale 4 und einer Unterschale 6 bestehendes zweiteiligen Gehäuse 8 aus Kunststoff, wobei die Oberschale 4 und die Unterschale 6 mittels dreier umseitig verteilt angeordneter Schnappverbindungselemente 10 im Montageendzustand aneinander befestigt sind. Zur Befestigung des pyrotechnischen Schutzschalters 2 an einer nicht mit abgebildeten Haltestruktur im Kraftfahrzeug weist die Oberschale 4 zwei Flügel 12 auf, die nach Art seitlicher Anformungen an zwei gegenüberliegenden Seiten der Oberschale 4 positioniert sind. Die Flügel 12 weisen dabei Durchbrüche auf, durch welche Schrauben zur Befestigung an der Haltestruktur des Kraftfahrzeuges geführt werden können.

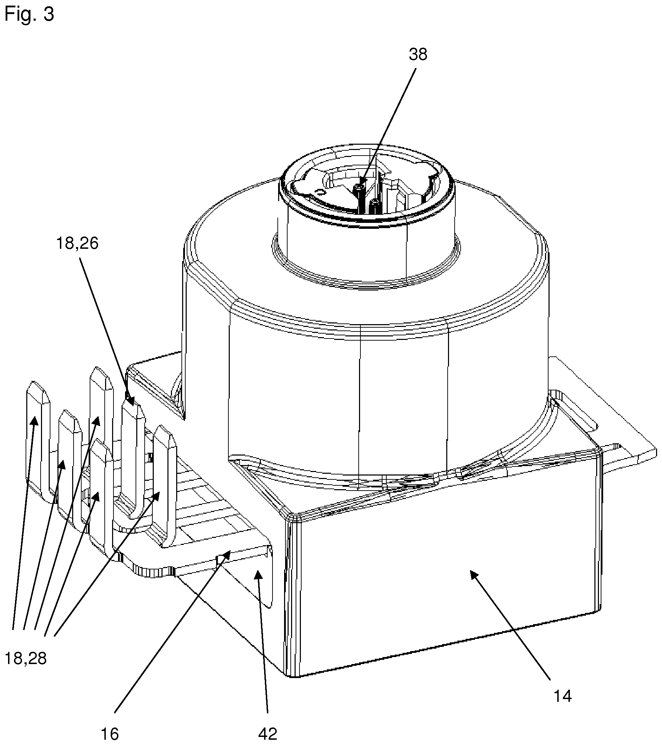

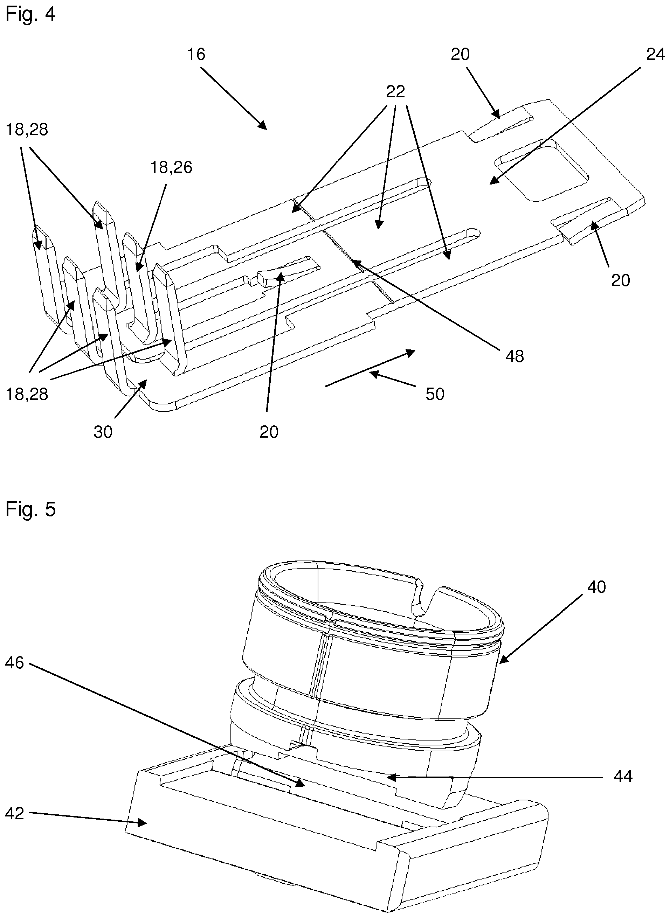

Im Gehäuse 8 des pyrotechnischen Schutzschalters 2 sind eine pyrotechnische Einheit 14 sowie ein Stromführungsblech 16 angeordnet, wobei das Stromführungsblech 16, wie in Fig. 3 skizziert, die pyrotechnische Einheit 14 durchsetzt. Das in Fig. 4 einzeln abgebildete Stromführungsblech 16 ist hierbei einstückig und einteilig als Stanzbiegeblech ausgebildet und weist eine näherungsweise rechteckige Grundgeometrie auf. An einer Seite des Stromführungsbleches 16 sind sechs als flache, langgestreckte Zungen ausgebildete Anschlusselemente 18 positioniert, die als Steckkontakte für eine Steckverbindung dienen und im wesentlichen senkrecht vom übrigen Stromführungsblech 16 abstehen, also quasi aus der Ebene des Stromführungsbleches 16 senkrecht herausstehen.

Die Herstellung des Stromführungsbleches 16 erfolgt dementsprechend in zwei Arbeitsschritten, wobei zunächst ein ebenes Stromführungsblech 16 aus einem Blechband ausgestanzt wird. Bei diesem sind die zungenartigen Anschlusselemente 18 bereits ausgebildet und in einem zweiten sich anschließenden Bearbeitungsschritt werden dann die Anschlusselemente 18 aus der Ebene des Stromführungsbleches 16 heraus gebogen und soweit umgebogen, bis diese senkrecht abstehen. Darüber hinaus weist das Stromführungsblech 16 noch drei Haltenasen 20 auf, die ebenfalls zungenartig ausgestaltet sind und wie die Anschlusselemente 18 im zweiten Bearbeitungsschritt aus der Ebene des Stromführungsbleches 16 heraus gebogen werden, allerdings lediglich ein Stück weit.

Im Mittenbereich des Stromführungsbleches 16 sind drei im Wesentlichen parallel zueinander angeordnete Blechstreifen 22 ausgebildet, die an dem den Anschlusselementen 18 abgewandten Ende des Stromführungsbleches 16 über ein Querverbindungselement 24 miteinander verbunden sind. An den mittleren Blechstreifen 22 ist eines der Anschlusselemente 18 angeformt, wobei dieses als Eingangsanschluss 26 für eine Stromeinspeisung über eine Zuführleitung dient. An die zwei äußeren Blechstreifen 22 sind jeweils zwei Anschlusselemente 18 angeformt, die als Ausgangsanschlüsse 28 ausgebildet und somit für eine Stromabführung über eine Stromabführleitung vorgesehen sind. Die beiden äußeren Blechstreifen 22 sind zudem über einen Ausgangsquersteg 30 miteinander verbunden, an welchem ein weiteres als Ausgangsanschluss 28 ausgebildetes Anschlusselement 18 angeformt ist.

Der pyrotechnische Schutzschalter 2 weist somit in diesem Ausführungsbeispiel einen Stromeingang mit einem Steckkontakt und einen Stromausgang mit fünf Steckkontakten auf. Die Steckkontakte, also die Anschlusselemente 18, sind dabei in zwei Reihen mit je drei Anschlusselementen 18 angeordnet und bilden zusammen mit einer eine Gehäusebuchse ausbildenden Gehäusewandung 32 eine Stecker-Einheit aus. In diese wird beim Einbinden des pyrotechnischen Schutzschalters 2 in einen Stromkreis eine komplementär ausgebildete Buchsen-Einheit eingesteckt, sodass mit nur einem Handgriff alle sechs Anschlusselemente 18, also sowohl der Eingangsanschluss 26 als auch die fünf Ausgangsanschlüsse 28, mit entsprechenden Gegenelementen des Stromkreises verbunden werden.

Die Gehäusewandung 32 ist dabei, wie in Fig. 1 und Fig. 2 erkennbar, als rahmenartige Anformung auf der Oberseite der Oberschale 4 ausgebildet, in welcher die Anschlusselemente 18 versenkt angeordnet sind. Weiter ist die Gehäusewandung 32 hinsichtlich ihrer Geometrie so gestaltet, dass an zwei Seiten Führungselemente 34 gegeben sind, die das Zusammenführen von Stecker-Einheit und Buchsen-Einheit erleichtern. Außerdem ist in der Gehäusewandung 32 ein seitlicher Durchbruch 36 ausgebildet, der als funktionales Gegenstück zu einer Rastnase an der Buchsen-Einheit dient, sodass die Buchsen-Einheit an der Stecker-Einheit verrastet werden kann.

Die nicht in allen Details dargestellte pyrotechnische Einheit 14 umfasst einen pyrotechnischen Treibsatz und einen Zünder, der durch ein elektrisches Signal, das Auslöse- oder Zündsignal, aktiviert wird und nachfolgend den pyrotechnischen Treibsatz zündet. Dabei weist der Zünder einen Signaleingang 38 auf, an welchen sich ein nicht mit abgebildeter Signalgeber mittels einer Steckverbindung signaltechnisch anschließen lässt. Durch den Signalgeber ist dann die Auslösebedingung für den pyrotechnischen Schutzschalter 2 vorgegeben, also diejenige Bedingung, bei der der Signalgeber ein Auslösesignal generiert und an den Zünder über den Signaleingang 38 übermittelt, sodass dieser den pyrotechnischen Treibsatz zündet.

Desweiteren umfasst die pyrotechnische Einheit 14 ein Hammerelement 40, kurz Hammer 40 genannt, sowie ein Ambosselement 42, kurz Amboss 42 genannt. Wird nun der pyrotechnische Treibsatz gezündet, so beschleunigt dieser das Hammerelement 40 in Richtung Ambosselement 42, wodurch die zwischen Hammerelement 40 und Ambosselement 42 positionierten Blechstreifen 22 im Mittenbereich des Stromführungsbleches 16 durchtrennt werden. Dabei weist das Hammerelement 40 im Bereich der dem Ambosselement 42 zugewandten Front einen stegartigen oder leistenförmigen Dorn 44 auf, und am Ambosselement 42 ist ergänzend dazu eine an den Dorn 44 angepasst Vertiefung 46 gegeben.

Der Dorn 44 wiederum weist im Mittenbereich, bezogen auf die Längsausdehnung der Leistenform, eine Materialaussparung auf oder umgekehrt betrachtet sind in den Außenbereichen zusätzliche sich in Richtung Ambosselement 42 erstreckende Materialanformungen gegeben. Komplementär hierzu ist auch die Vertiefung 46 nicht als einfache Nut mit einheitlichem Profil ausgebildet, stattdessen sind bezogen auf deren Längsausdehnung randseitig zusätzliche Materialaussparungen vorgesehen. Infolgedessen trifft der Dorn 44 im Auslösefall zunächst auf die äußeren Blechstreifen 22 und etwas zeitversetzt dazu auf den mittleren Blechstreifen 22, sodass der mittlere Streifen 22 zeitversetzt zu den äußeren Blechstreifen 22 durchtrennt wird.

Um die Durchtrennung zu erleichtern oder vielmehr um einen kleineren oder schwächeren pyrotechnischen Treibsatz verwenden zu können, ist am Stromführungsblech 16 eine Sollbruchstelle 48 gegeben, die durch eine Nut an der Unterseite eines jeweiligen Blechstreifens 22 ausgebildet ist.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen.

### Bezugszeichenliste

- 2: Pyrotechnischer Schutzschalter
- 4: Oberschale
- 6: Unterschale
- 8: Gehäuse
- 10: Schnappverbindungselement
- 12: Flügel
- 14: Pyrotechnische Einheit
- 16: Stromführungsblech
- 18: Anschlusselement
- 20: Haltenase
- 22: Blechstreifen
- 24: Querverbindungselement
- 26: Eingangsanschluss
- 28: Ausgangsanschluss
- 30: Ausgangsquersteg
- 32: Gehäusewandung
- 34: Führungselement
- 36: Durchbruch
- 38: Signaleingang
- 40: Hammerelement
- 42: Ambosselement
- 44: Dorn
- 46: Vertiefung
- 48: Sollbruchstelle
- 50: Längsrichtung

## Patentansprüche

1. Pyrotechnischer Schutzschalter (2), insbesondere für ein Kraftfahrzeug, umfassend ein Gehäuse (8), ein Stromführungsblech (16) mit zumindest zwei Anschlusselementen (18) sowie eine pyrotechnische Einheit (14) zur Durchtrennung zumindest eines Teils des Stromführungsbleches (16), wobei eines der zumindest zwei Anschlusselemente (18) des Stromführungsbleches (16) als Eingangsanschluss (26) für eine Stromzuflussleitung und das andere der zumindest zwei Anschlusselemente (18) als Ausgangsanschluss (28) für eine Stromabführleitung ausgebildet ist,
**dadurch gekennzeichnet,**
**dass** alle Anschlusselemente (18) des Stromführungsbleches (16) als Steckkontakte einer Steckverbindung ausgebildet sind und alle Anschlusselemente (18) sowohl des Eingangsanschlusses (26) als auch des Ausgangsanschlusses (28) einseitig in einem Randbereich des Stromführungsbleches (16) angeordnet sind und eine Stecker-Einheit ausbilden und dass das Stromführungsblech (16) zumindest zwei Blechstreifen (22) aufweist, die im Wirkbereich der pyrotechnischen Einheit (14) im Wesentlichen parallel zueinander ausgerichtet sind, wobei einer der zumindest zwei Blechstreifen (22) als Teil eines Eingangsstrompfades elektrisch leitend am Eingangsanschluss (26) angebunden ist und wobei der andere der zumindest zwei Blechstreifen (22) als Teil eines Ausgangsstrompfades elektrisch leitend am Ausgangsanschluss (28) angebunden ist, wobei die Blechstreifen (22) außerhalb des Wirkungsbereichs der pyrotechnischen Einheit miteinander verbunden sind, wobei die pyrotechnische Einheit (14) ein Hammerelement (40) umfasst, welches im Auslösefall auf ein Ambosselement (42) getrieben wird, und wobei das Hammerelement (40) derart ausgestaltet ist, dass die zwei Blechstreifen (22) im Auslösefall zeitversetzt vom Hammerelement (40) getroffen und durchtrennt werden.

2. Pyrotechnischer Schutzschalter (2) nach Anspruch 1,
**dadurch gekennzeichnet,**
**dass** das Stromführungsblech (16) mit den Anschlusselementen (18) als einstückiges Stanzbiegeblech ausgebildet ist.

3. Pyrotechnischer Schutzschalter (2) nach Anspruch 1 oder 2,
**dadurch gekennzeichnet,**
**dass** der Eingangsanschluss (26) und der Ausgangsanschluss (28) über ein Querverbindungselement (24) des Stromführungsbleches (16) miteinander verbunden sind, welches dem Eingangsanschluss (26) und dem Ausgangsanschluss (28) gegenüberliegend in einem zweiten Randbereich des Stromführungsbleches (16) angeordnet ist.

4. Pyrotechnischer Schutzschalter (2) nach einem der Ansprüche 1 bis 3,
**dadurch gekennzeichnet,**
**dass** die Anschlusselemente (18) des Stromführungsbleches (16) matrixartig angeordnet sind.

5. Pyrotechnischer Schutzschalter (2) nach einem der Ansprüche 1 bis 4,
**dadurch gekennzeichnet,**
**dass** die Anschlusselemente (18) des Stromführungsbleches (16) als umgebogene Zungen des Stromführungsblechs (16) ausgestaltet sind.

6. Pyrotechnischer Schutzschalter (2) nach einem der Ansprüche 1 bis 5,
**dadurch gekennzeichnet,**
**dass** das Stromführungsblech (16) abstehende Anschlusselemente (18) aufweist.

7. Pyrotechnischer Schutzschalter (2) nach einem der Ansprüche 1 bis 6,
**dadurch gekennzeichnet,**
**dass** das Stromführungsblech (16) im Wesentlichen senkrecht abstehende Anschlusselemente (18) aufweist.

8. Pyrotechnischer Schutzschalter (2) nach einem der Ansprüche 1 bis 7,
**dadurch gekennzeichnet,**
**dass** alle Anschlusselemente (18) des Stromführungsbleches (16) von einer Gehäusewandung (32) des Gehäuses (8) umgeben sind.

9. Pyrotechnischer Schutzschalter (2) nach Anspruch 8,
**dadurch gekennzeichnet,**
**dass** die Gehäusewandung (32) eine Gehäusebuchse ausbildet, in welcher alle Anschlusselemente (18) des Stromführungsbleches (16) angeordnet sind.

10. Pyrotechnischer Schutzschalter (2) nach einem der Ansprüche 1 bis 9,
**dadurch gekennzeichnet,**
**dass** am Stromführungsblech (16) eine Sollbruchstelle (48) ausgebildet ist.

11. Pyrotechnischer Schutzschalter (2) nach einem der Ansprüche 1 bis 10,
**dadurch gekennzeichnet,**
**dass** dieser als vorgefertigte Montagebaueinheit mit integriertem Stromführungsblech (16) und integrierter pyrotechnischer Einheit (14) derart ausgebildet ist, dass die Montagebaueinheit ausschließlich mit Hilfe der Steckkontakte in einen Schaltkreis und insbesondere in ein Bordnetz eines Kraftfahrzeuges elektrisch eingebunden wird.

## Claims

1. A pyrotechnic circuit breaker (2), in particular for a motor vehicle, comprising a housing (8), a current carrying sheet metal (16) with at least two terminal elements (18) as well as a pyrotechnic unit (14) for cutting through at least a part of the current carrying sheet metal (16), wherein one of the at least two terminal elements (18) of the current carrying sheet metal (16) is formed as an input terminal (26) for a current supply line and the other of the at least two terminal elements (18) is formed as an output terminal (28) for a current discharge line,
**characterised,**
**in that** all terminal elements (18) of the current carrying sheet metal (16) are formed as plug contacts of a plug connection and all terminal elements (18) of the input terminal (26) as well as of the output terminal (28) are arranged on one side in a border area of the current carrying sheet metal (16) and form a plug unit and in that the current carrying sheet metal (16) has at least two sheet metal strips (22), which are aligned substantially parallel to one another in the operating area of the pyrotechnic unit (14), wherein one of the at least two sheet metal strips (22) is connected to the input terminal (26) in an electrically conductive manner as part of an input current path and wherein the other of the at least two sheet metal strips (22) is connected to the output terminal (28) in an electrically conductive manner as part of an output current path, wherein the sheet metal strips (22) are connected together outside of the operating area of the pyrotechnic unit,
wherein the pyrotechnic unit (14) comprises a hammer element (40), which is driven towards an anvil element (42) in the case of triggering, and wherein the hammer element (40) is designed such that, in the case of triggering, the two sheet metal strips (22) are struck and cut through by the hammer element (40) in a time-delayed manner.

2. The pyrotechnic circuit breaker (2) according to claim 1,
**characterised,**
**in that** the current carrying sheet metal (16) is formed as a single piece stamping and bending sheet metal with the terminal elements (18).

3. The pyrotechnic circuit breaker (2) according to claim 1 or 2,
**characterised,**
**in that** the input terminal (26) and the output terminal (28) are connected together via a cross-connection element (24) of the current carrying sheet metal (16), which is arranged opposite the input terminal (26) and the output terminal (28) in a second border area of the current carrying sheet metal (16).

4. The pyrotechnic circuit breaker (2) according to any one of claims 1 to 3,
**characterised,**
**in that** the terminal elements (18) of the current carrying sheet metal (16) are arranged like a matrix.

5. The pyrotechnic circuit breaker (2) according to any of claims 1 to 4,
**characterised,**
**in that** the terminal elements (18) of the current carrying sheet metal (16) are designed as bent tongues of the current carrying sheet metal (16).

6. The pyrotechnic circuit breaker (2) according to any of claims 1 to 5,
**characterised,**
**in that** the current carrying sheet metal (16) has projecting terminal elements (18).

7. The pyrotechnic circuit breaker (2) according to any of claims 1 to 6,
**characterised,**
**in that** the current carrying sheet metal (16) has substantially vertically projecting terminal elements (18).

8. The pyrotechnic circuit breaker (2) according to any of claims 1 to 7,
**characterised,**
**in that** all terminal elements (18) of the current carrying sheet metal (16) are surrounded by a housing wall (32) of the housing (8).

9. The pyrotechnic circuit breaker (2) according to claim 8,
**characterised,**
**in that** the housing wall (32) forms a housing bushing, in which all terminal elements (18) of the current carrying sheet metal (16) are arranged.

10. The pyrotechnic circuit breaker (2) according to any of claims 1 to 9,
**characterised,**
**in that** a predetermined breaking point (48) is formed on the current carrying sheet metal (16).

11. The pyrotechnic circuit breaker (2) according to any of claims 1 to 10,
**characterised,**
**in that** this is formed as prefabricated assembly unit with integrated current carrying sheet metal (16) and integrated pyrotechnic unit (14) such that the assembly unit is electrically incorporated into a circuit and in particular into an on-board network of a motor vehicle exclusively with the help of the plug contacts.

## Revendications

1. Commutateur de protection pyrotechnique (2), en particulier pour un véhicule automobile, comprenant un boîtier (8), une tôle de conduction de courant (16) comportant au moins deux éléments de raccordement (18) ainsi qu'une unité pyrotechnique (14) destinée à la désolidarisation d'au moins une partie de la tôle de conduction de courant (16), l'un desdits au moins deux éléments de raccordement (18) de la tôle de conduction de courant (16) étant configuré sous forme de borne d'entrée (26) pour une ligne d'arrivée de courant et l'autre desdits au moins deux éléments de raccordement (18) étant configuré sous forme de borne de sortie (28) pour une ligne de départ de courant,
**caractérisé en ce que**
tous les éléments de raccordement (18) de la tôle de conduction de courant (16) sont configurés sous forme de contacts à fiches d'un connecteur et tous les éléments de raccordement (18) aussi bien de la borne d'entrée (26) que de la borne de sortie (28) sont disposés d'un côté dans une zone de bord de la tôle de conduction de courant (16) et constituent une unité enfichable et **en ce que** la tôle de conduction de courant (16) comporte au moins deux bandes de tôle (22) qui sont orientées essentiellement parallèlement entre elles dans la zone d'action de l'unité pyrotechnique (14), l'une desdites au moins deux bandes de tôle (22) étant reliée en conduction électrique, en tant que partie d'un trajet de courant d'entrée, à la borne d'entrée (26) et l'autre desdites au moins deux bandes de tôle (22) étant reliée en conduction électrique, en tant que partie d'un trajet de courant de sortie, à la borne de sortie (28), les bandes de tôle (22) étant raccordées l'une à l'autre à l'extérieur de la zone d'action de l'unité pyrotechnique,
l'unité pyrotechnique (14) comprenant un élément de type marteau (40) qui, dans le cas de déclenchement, est projeté sur un élément de type enclume (42), et l'élément de type marteau (40) étant conçu de telle façon que les deux bandes de tôle (22) sont, dans le cas de déclenchement, frappées par l'élément de type marteau (40) et dissociées.

2. Commutateur de protection pyrotechnique (2) selon la revendication 1,
**caractérisé en ce que**
la tôle de conduction de courant (16) comportant les éléments de raccordement (18) est réalisée sous forme d'une tôle estampée et pliée en une seule pièce.

3. Commutateur de protection pyrotechnique (2) selon la revendication 1 ou 2,
**caractérisé en ce que**
la borne d'entrée (26) et la borne de sortie (28) sont reliées l'une à l'autre par un élément connecteur transversal (24) de la tôle de conduction de courant (16), qui est disposé dans une deuxième zone de bord de la tôle de conduction de courant (16) en faisant face à la borne d'entrée (26) et à la borne de sortie (28).

4. Commutateur de protection pyrotechnique (2) selon l'une quelconque des revendications 1 à 3,
**caractérisé en ce que**
les éléments de raccordement (18) de la tôle de conduction de courant (16) sont en disposition de type matrice.

5. Commutateur de protection pyrotechnique (2) selon l'une quelconque des revendications 1 à 4
**caractérisé en ce que**
les éléments de raccordement (18) de la tôle de conduction de courant (16) sont réalisés sous forme de lames repliées de la tôle de conduction de courant (16).

6. Commutateur de protection pyrotechnique (2) selon l'une quelconque des revendications 1 à 5,
**caractérisé en ce que**
la tôle de conduction de courant (16) comporte des éléments de raccordement (18) faisant saillie.

7. Commutateur de protection pyrotechnique (2) selon l'une quelconque des revendications 1 à 6,
**caractérisé en ce que**
la tôle de conduction de courant (16) comporte des éléments de raccordement (18) faisant saillie essentiellement verticalement.

8. Commutateur de protection pyrotechnique (2) selon l'une quelconque des revendications 1 à 7,
**caractérisé en ce que**
tous les éléments de raccordement (18) de la tôle de conduction de courant (16) sont entourés par une paroi de boîtier (32) du boîtier (8).

9. Commutateur de protection pyrotechnique (2) selon la revendication 8,
**caractérisé en ce que**
la paroi de boîtier (32) constitue une douille de boîtier dans laquelle sont disposés tous les éléments de raccordement (18) de la tôle de conduction de courant (16).

10. Commutateur de protection pyrotechnique (2) selon l'une quelconque des revendications 1 à 9,
**caractérisé en ce**
**qu'**un point destiné à la rupture (48) est réalisé sur la tôle de conduction de courant (16).

11. Commutateur de protection pyrotechnique (2) selon l'une quelconque des revendications 1 à 10,
**caractérisé en ce que**
ce dernier en tant que composant de montage préfabriqué à tôle de conduction de courant (16) intégrée et unité pyrotechnique (14) intégrée est conçu de telle façon que l'unité de montage est raccordée électriquement exclusivement à l'aide des contacts à fiches dans un circuit de commutation et en particulier dans un réseau de bord d'un véhicule automobile.
